# EUROPÄISCHE PATENTSCHRIFT

(11) **EP 4 298 002 B1**
(45) Veröffentlichungstag und Bekanntmachung des Hinweises auf die Patenterteilung: **12.03.2025**
(21) Anmeldenummer: 22700962.8
(22) Anmeldetag: 19.01.2022
(51) Int. Cl.: B60W 60/00, G08G 1/01

(54) **ERHÖHEN EINES AUTOMATISIERUNGSGRADS EINES FAHRERASSISTENZSYSTEMS EINES KRAFTFAHRZEUGS**
INCREASING A DEGREE OF AUTOMATION OF A DRIVER ASSISTANCE SYSTEM OF A MOTOR VEHICLE
AUGMENTATION DU DEGRÉ D'AUTOMATISATION D'UN SYSTÈME D'AIDE À LA CONDUITE D'UN VÉHICULE AUTOMOBILE

(30) Priorität: 23.02.2021 DE 102021104220
(43) Veröffentlichungstag der Anmeldung: 03.01.2024
(73) Patentinhaber: Bayerische Motoren Werke Aktiengesellschaft, 80809 München (DE)
(72) Erfinder: PAROLINI, Luca, 84032 Landshut (DE); SCHNEIDER, Sebastian, 85622 Feldkirchen (DE)
(86) Internationale Anmeldenummer: PCT/EP2022/051057
(87) Internationale Veröffentlichungsnummer: WO 2022/179769

(56) Entgegenhaltungen:
- WO-A1-2020/125939
- WO-A1-2020/205648
- DE-A1- 102014 210 147

## Beschreibung

Die Erfindung betrifft ein System und ein Verfahren zum Erhöhen eines Automatisierungsgrads eines Fahrerassistenzsystems eines Kraftfahrzeugs.

Unter dem Begriff "automatisiertes Fahren" kann im Rahmen des Dokuments ein Fahren mit automatisierter Längs- oder Querführung oder ein autonomes Fahren mit automatisierter Längs- und Querführung verstanden werden. Der Begriff "automatisiertes Fahren" umfasst ein automatisiertes Fahren mit einem beliebigen Automatisierungsgrad. Beispielhafte Automatisierungsgrade sind ein assistiertes, teilautomatisiertes, hochautomatisiertes oder vollautomatisiertes Fahren. Diese Automatisierungsgrade wurden von der Bundesanstalt für Straßenwesen (BASt) definiert. Beim assistierten Fahren führt der Fahrer dauerhaft die Längs- oder Querführung aus, während das System die jeweils andere Funktion in gewissen Grenzen übernimmt. Beim teilautomatisierten Fahren (TAF) übernimmt das System die Längs- und Querführung für einen gewissen Zeitraum und/oder in spezifischen Situationen, wobei der Fahrer das System wie beim assistierten Fahren dauerhaft überwachen muss. Beim hochautomatisierten Fahren (HAF) übernimmt das System die Längs- und Querführung für einen gewissen Zeitraum, ohne dass der Fahrer das System dauerhaft überwachen muss; der Fahrer muss aber in einer gewissen Zeit in der Lage sein, die Fahrzeugführung zu übernehmen. Beim vollautomatisierten Fahren (VAF) kann das System für einen spezifischen Anwendungsfall das Fahren in allen Situationen automatisch bewältigen; für diesen Anwendungsfall ist kein Fahrer mehr erforderlich. Die vorstehend genannten vier Automatisierungsgrade gemäß der Definition der BASt entsprechen den SAE-Level 1 bis 4 (SAE - Society of Automotive Engineering). Beispielsweise entspricht das hochautomatisierte Fahren (HAF) gemäß der BASt dem Level 3 der SAE. Ferner ist von der SAE noch der SAE-Level 5 als höchster Automatisierungsgrad vorgesehen, der in der Definition der BASt nicht enthalten ist. Der SAE-Level 5 entspricht einem fahrerlosen Fahren, bei dem das System während der ganzen Fahrt alle Situationen wie ein menschlicher Fahrer automatisch bewältigen kann; ein Fahrer ist generell nicht mehr erforderlich.

Bei steigendem Automatisierungsniveau steigen auch die Anforderungen an Hard- und Software des Kraftfahrzeugs, was in höheren Herstellkosten des Kraftfahrzeugs resultiert.

Dokument WO 2020/205648 A1 offenbart eine Vorrichtung die mindestens eine Schnittstelle zum Empfangen eines Signals, das ein zweites Fahrzeug in der Nähe eines ersten Fahrzeugs identifiziert, und eine Verarbeitungsschaltung zum Erhalten eines dem zweiten Fahrzeug zugeordneten Verhaltensmodells, wobei das Verhaltensmodell das Fahrverhalten des zweiten Fahrzeugs definiert, Verwenden des Verhaltensmodells zum Vorhersagen von Aktionen des zweiten Fahrzeugs und Bestimmen eines Wegplans für das erste Fahrzeug auf der Grundlage der vorhergesagten Aktionen des zweiten Fahrzeugs umfasst.

Es ist Aufgabe der Erfindung, höhere Automatisierungsniveaus ohne höhere Herstellkosten des Kraftfahrzeugs zu ermöglichen.

Die Aufgabe wird durch die Merkmale der unabhängigen Patentansprüche gelöst. Vorteilhafte Ausführungsformen sind in den abhängigen Ansprüchen beschrieben.

Ein erster Aspekt der Erfindung betrifft ein System zur Erhöhung eines Automatisierungsgrads eines Fahrerassistenzsystems eines Kraftfahrzeugs.

Das Fahrerassistenzsystem umfasst zumindest einen ersten Sensor, zumindest eine erste Recheneinheit und zumindest einen Aktuator als Komponenten, wobei der zumindest eine erste Sensor, die zumindest eine erste Recheneinheit und der zumindest eine Aktuator Bestandteile des Kraftfahrzeugs sind.

Der zumindest eine erste Sensor ist insbesondere ein Sensor zum Umfelderfassung, beispielsweise ein Radar-, Kamera-, Lidar- oder Ultraschallsensor.

Der zumindest eine Aktuator ist beispielsweise eine Lenkung oder ein Antrieb des Kraftfahrzeugs.

Das System umfasst neben den Komponenten des Kraftfahrzeugs, also dem Fahrerassistenzsystem, dem zumindest einen ersten Sensor, der zumindest einen ersten Recheneinheit und dem zumindest einen Aktuator, auch Komponenten eines Verkehrsteilnehmers im Umfeld des Kraftfahrzeugs. Das System ist also insbesondere ein dynamisches System, das auf Basis eines ad-hoc-Netzwerks im zeitlichen Verlauf des Betriebs verschiedene Komponenten umfasst. Beispielsweise wird das ad-hoc-Netzwerk dabei über Mobilfunk oder WLAN gebildet.

Der Automatisierungsgrad des Fahrerassistenzsystems stellt Sicherheitsanforderungen an den zumindest einen Sensor, die zumindest eine Reicheneinheit und den zumindest einen Aktuator, wobei ein höherer Automatisierungsgrad höhere Anforderungen stellt als ein niedrigerer Automatisierungsgrad.

Diese Sicherheitsanforderungen werden üblicherweise während der Entwicklung des Fahrerassistenzsystems abgeleitet. Hierfür ist im Stand der Technik ein Vorgehen in der Norm ISO 26262 bekannt, bei dem mittels einer Gefährdungs- und Risikoanalyse gefährliche Fehler des Systems ermittelt werden. Zur Behandlung der gefährlichen Fehler werden dann Sicherheitskonzepte erstellt, aus denen sich funktionale und nicht-funktionale Anforderungen an die Komponenten des Systems ergeben.

Die Komponenten des Fahrerassistenzsystems sind eingerichtet, Sicherheitsanforderungen bis zu einem vorgegebenen Grad zu erfüllen, wodurch der von dem Fahrerassistenzsystem zu erreichende Automatisierungsgrad begrenzt ist.

Der von den Komponenten des Fahrerassistenzsystems höchstens erreichbare Grad von Sicherheitsanforderungen kann beispielsweise während der Entwicklung des Fahrerassistenzsystems händisch ermittelt werden. Es sind im Stand der Technik allerdings auch bereits Methoden bekannt, bei denen formalisierte Sicherheitsanforderungen zur Laufzeit des Systems automatisiert formalisierten Eigenschaften der Komponenten gegenübergestellt werden, so dass der höchstens erreichbare Grad von Sicherheitsanforderungen auch automatisiert zur Laufzeit des Systems bestimmt werde kann.

Das System ist eingerichtet, einen Verkehrsteilnehmer im Umfeld des Kraftfahrzeugs zu erkennen, beispielsweise ein weiteres Kraftfahrzeug. Die Erkennung kann beispielsweise mittels der Sensoren des Kraftfahrzeugs erfolgen und/oder über ein drahtloses Netzwerk, das gegebenenfalls direkt als Grundlage für eine ad-hoc-Netzwerkkommunikation dienen kann.

Außerdem ist das System eingerichtet festzustellen, dass der Verkehrsteilnehmer zumindest einen zweiten Sensor und/oder zumindest eine zweite Recheneinheit umfasst. Der zweite Sensor ist insbesondere Ein Sensor zur Umfelderfassung, beispielsweise ein Radar-, Kamera-, Lidar- oder Ultraschallsensor.

Darüber hinaus ist das System eingerichtet, zu prüfen, ob das Fahrerassistenzsystem bei Nutzung des zumindest einen zweiten Sensors und/oder der zumindest einen zweiten Recheneinheit die Sicherheitsanforderungen des höheren Automatisierungsgrads erfüllt.

Insbesondere ist das System eingerichtet, den formalisierten Sicherheitsanforderungen des höheren Automatisierungsgrads formalisierte Eigenschaften des zumindest einen ersten Sensors, der zumindest einen ersten Recheneinheit, des zumindest einen Aktuators, des zumindest einen zweiten Sensors und der zumindest einen zweiten Recheneinheit gegenüberzustellen, um zu prüfen ob das Fahrerassistenzsystem bei Nutzung des zumindest einen zweiten Sensors und/oder der zumindest einen zweiten Recheneinheit die Sicherheitsanforderungen des höheren Automatisierungsgrads erfüllt. Hierfür kann beispielsweise der im Stand der Technik bekannte Ansatz der sogenannten "Safety Contracts" verwendet werden.

Außerdem ist das System eingerichtet, den Automatisierungsgrad, mit dem das Fahrerassistenzsystem das Kraftfahrzeugs steuert, auf den höheren Automatisierungsgrad durch Nutzung des zumindest einen zweiten Sensors und/oder der zumindest einen zweiten Recheneinheit zu erhöhen, wenn das Fahrerassistenzsystem bei Nutzung des zumindest einen zweiten Sensors und/oder der zumindest einen zweiten Recheneinheit die Sicherheitsanforderungen des höheren Automatisierungsgrads erfüllt.

Alternativ kann dem Fahrer des Kraftfahrzeugs auch nur angeboten werden, den Automatisierungsgrad, mit dem das Fahrerassistenzsystem das Kraftfahrzeug steuert, zu erhöhen, so dass die Entscheidung über den tatsächlichen Automatisierungsgrad beim Fahrer des Kraftfahrzeugs verbleibt.

In einer vorteilhaften Ausführungsform der Erfindung umfasst ein Fahrerassistenzsystem des Verkehrsteilnehmers den zumindest einen zweiten Sensor und/oder die zumindest eine zweite Recheneinheit.

Das Fahrerassistenzsystem des Verkehrsteilnehmers ist eingerichtet ist, den Verkehrsteilnehmer automatisiert zu steuern. Insbesondere ist das Fahrerassistenzsystem des Verkehrsteilnehmers eingerichtet, die Längs- und/oder Querführung des Verkehrsteilnehmers zu steuern.

Das System ist eingerichtet, dem Fahrerassistenzsystem des Verkehrsteilnehmers vorzugeben, den Verkehrsteilnehmer automatisiert derart zu steuern, dass das Fahrerassistenzsystem des Kraftfahrzeugs den zumindest einen zweiten Sensor und/oder die zumindest eine zweite Recheneinheit nutzen kann. Insbesondere ist das System eingerichtet, dem Fahrerassistenzsystem des Verkehrsteilnehmers eine Trajektorie vorzugeben, entlang derer das Fahrerassistenzsystem des Verkehrsteilnehmers den Verkehrsteilnehmer führen soll.

Das Fahrerassistenzsystem des Kraftfahrzeugs kann den zumindest einen zweiten Sensor insbesondere dann nutzen, wenn der von dem zumindest einen zweiten Sensor erfasste Sensorbereich sich im Umfeld des Kraftfahrzeugs befindet. Beispielsweise kann das Fahrerassistenzsystem des Kraftfahrzeugs den zumindest einen zweiten Sensor nutzen, wenn sich der von dem zumindest einen zweiten Sensor erfasste Sensorbereich zumindest teilweise mit dem von dem zumindest einen ersten Sensor erfassten Sensorbereich überschneidet.

In einer weiteren vorteilhaften Ausführungsform der Erfindung ist das System eingerichtet, die Sicherheitsanforderungen des höheren Automatisierungsgrads auf den zumindest einen ersten Sensor, den zumindest einen zweiten Sensor, die zumindest eine erste Recheneinheit und/oder die zumindest eine zweite Recheneinheit zu dekomponieren. Das grundsätzliche Regelwerk zur Dekomposition von Sicherheitsanforderungen ist in Band 9 der ISO 26262 beschrieben. Im Stand der Technik ist auch die Automatisierung der Dekomposition bekannt.

Das System ist außerdem eingerichtet zu prüfen, ob das Fahrerassistenz bei zusätzlicher Nutzung des zumindest einen zweiten Sensors und/oder der zumindest einen zweiten Recheneinheit die Sicherheitsanforderungen des erhöhten Automatisierungsgrads erfüllt, und den Automatisierungsgrad des Kraftfahrzeugs auf den erhöhten Automatisierungsgrad durch Nutzung des zumindest einen zweiten Sensors und/oder der zumindest einen zweiten Recheneinheit zu erhöhen, wenn das Fahrerassistenzsystem bei zusätzlicher Nutzung des zumindest einen zweiten Sensors und/oder der zumindest einen zweiten Recheneinheit die Sicherheitsanforderungen des erhöhten Automatisierungsgrads erfüllt.

In einer weiteren vorteilhaften Ausführungsform der Erfindung umfasst der Verkehrsteilnehmer zumindest eine zweite Recheneinheit, und das Fahrerassistenzsystem des Kraftfahrzeugs ist eingerichtet, die zumindest eine zweite Recheneinheit als redundanten Rechenpfad zu einem Rechenpfad auf der zumindest einen ersten Recheneinheit zu nutzen.

In einer weiteren vorteilhaften Ausführungsform der Erfindung umfasst der Verkehrsteilnehmer zumindest einen zweiten Sensor, und das Fahrerassistenzsystem des Kraftfahrzeugs ist eingerichtet, den zumindest einen zweiten Sensor als zu dem zumindest einen ersten Sensor diversitären Sensor zu nutzen.

Insbesondere ist das Fahrerassistenzsystem des Kraftfahrzeugs eingerichtet, den zumindest einen zweiten Sensor als zu dem zumindest einen ersten Sensor diversitären Sensor zu nutzen, wenn sich die Sensorbereiche des zumindest einen ersten Sensors und des zumindest einen zweiten Sensors zumindest teilweise überschneiden und sich die Sensorprinzipien des zumindest einen ersten Sensors und des zumindest einen zweiten Sensors unterscheiden. Das Sensorprinzip eines Sensors ist die physikalische Wirkweise des Sensors. Unterschiedliche Sensorprinzipien sind beispielsweise Radar, Lidar, Kamera oder Ultraschall.

In einer weiteren vorteilhaften Ausführungsform der Erfindung umfasst der Verkehrsteilnehmer zumindest einen zweiten Sensor und das Fahrerassistenzsystem des Kraftfahrzeugs ist eingerichtet, den zumindest einen zweiten Sensor als zusätzlichen Blickwinkel auf das Umfeld des Kraftfahrzeugs zu nutzen.

Insbesondere ist das Fahrerassistenzsystem des Kraftfahrzeugs eingerichtet, den zumindest einen zweiten Sensor als zusätzlichen Blickwinkel auf das Umfeld des Kraftfahrzeugs zu nutzen, wenn sich der Sensorbereich des zumindest einen ersten Sensors und der Sensorbereich des zumindest einen zweiten Sensors zumindest teilweise überschneiden. Durch die unterschiedlichen Positionen des zumindest einen ersten Sensors und des zumindest einen zweiten Sensors, die sich durch ihre Anbringung an dem Kraftfahrzeug und dem Verkehrsteilnehmer ergeben, ergibt sich ein zusätzlicher Blickwinkel auf das Umfeld des Kraftfahrzeugs.

Insbesondere ist das Fahrerassistenzsystem des Kraftfahrzeugs eingerichtet, den zumindest einen zweiten Sensor als zusätzlichen Blickwinkel auf das Umfeld des Kraftfahrzeugs zu nutzen, wenn sich der Sensorbereich des zumindest einen ersten Sensors und der Sensorbereich des zumindest einen zweiten Sensors nicht überschneiden, beispielsweise wenn der Sensorbereich des zumindest einen zweiten Sensors einen Teil des Umfelds des Kraftfahrzeugs abdeckt, der nicht von dem Sensorbereich des zumindest einen ersten Sensors erfasst wird. So kann beispielsweise ein Front-Sensor des Verkehrsteilnehmers als der zumindest eine zweite Sensor genutzt werden, wenn der Verkehrsteilnehmer sich vor dem Kraftfahrzeug befindet. Somit lässt sich beispielsweise schneller auf Notsituationen reagieren, da das Kraftfahrzeug nicht erst eine Reaktion des Verkehrsteilnehmers erkennt sondern bereits selbstständig den Front-Sensor des Verkehrsteilnehmers auswerten kann und beispielsweise den Abstand des Kraftfahrzeugs zum Verkehrsteilnehmer vergrößern kann, die Geschwindigkeit des Kraftfahrzeugs verringern kann, und/oder einen Warnblinker aktivieren kann.

In einer weiteren vorteilhaften Ausführungsform der Erfindung ist das System eingerichtet, in einer Stausituation den Verkehrsteilnehmer im Umfeld des Kraftfahrzeugs zu erkennen. Eine Stausituation ist eine Verkehrssituation mit stark stockendem oder zum Stillstand gekommenem Verkehr. Eine Stausituation ist insbesondere, wenn mehrere Fahrzeuge mindestens fünf Minuten lang im Schnitt unter 20 km/h schnell sind und das auf einer Länge von mindestens einem Kilometer. Alternativ oder zusätzlich ist eine Stausituation beispielsweise auch, wenn mehrere Fahrzeuge mindestens fünf Minuten lang im Schnitt zwischen 20 und 40 km/h schnell fahren und das auf einer Länge von mindestens einem Kilometer.

Hierbei liegt der Erfindung die Erkenntnis zugrunde, dass in der Stausituation der Verkehrsteilnehmer sich relativ lange im Umfeld des Kraftfahrzeugs befindet und sich somit die Sensorbereiche des zumindest einen ersten Sensors und des zumindest einen zweiten Sensors sich vergleichsweise lange überschneiden. Somit kann die Erfindung in einer Stausituation besonders lange genutzt werden, was häufige Wechsel des Automatisierungsgrads des Kraftfahrzeugs vermeidet.

In einer weiteren vorteilhaften Ausführungsform der Erfindung ist der Verkehrsteilnehmer ein Objekt der Verkehrsinfrastruktur.

Ein zweiter Aspekt der Erfindung betrifft ein Verfahren zur Erhöhung eines Automatisierungsgrads eines Fahrerassistenzsystems eines Kraftfahrzeugs.

Das Fahrerassistenzsystem umfasst zumindest einen ersten Sensor, zumindest eine erste Recheneinheit und zumindest einen Aktuator als Komponenten.

Der Automatisierungsgrad des Fahrerassistenzsystems stellt Sicherheitsanforderungen an den zumindest einen Sensor, die zumindest eine Reicheneinheit und den zumindest einen Aktuator, wobei ein höherer Automatisierungsgrad höhere Anforderungen stellt als ein niedrigerer Automatisierungsgrad.

Die Komponenten des Fahrerassistenzsystems sind eingerichtet, Sicherheitsanforderungen bis zu einem vorgegebenen Grad zu erfüllen, wodurch der von dem Fahrerassistenzsystem zu erreichende Automatisierungsgrad begrenzt ist.

Ein Schritt des Verfahrens ist das Erkennen eines Verkehrsteilnehmers im Umfeld des Kraftfahrzeugs.

Ein weiterer Schritt des Verfahrens ist das Feststellen, dass der Verkehrsteilnehmer zumindest einen zweiten Sensor und/oder zumindest eine zweite Recheneinheit umfasst.

Ein weiterer Schritt des Verfahrens ist das Prüfen, ob das Fahrerassistenzsystem bei Nutzung des zumindest einen zweiten Sensors und/oder der zumindest einen zweiten Recheneinheit die Sicherheitsanforderungen des höheren Automatisierungsgrads erfüllt.

Ein weiterer Schritt des Verfahrens ist das Erhöhen des Automatisierungsgrads auf den höheren Automatisierungsgrad durch Nutzung des zumindest einen zweiten Sensors und/oder der zumindest einen zweiten Recheneinheit, wenn das Fahrerassistenzsystem bei Nutzung des zumindest einen zweiten Sensors und/oder der zumindest einen zweiten Recheneinheit die Sicherheitsanforderungen des höheren Automatisierungsgrads erfüllt.

Die vorstehenden Ausführungen zum erfindungsgemäßen System nach dem ersten Aspekt der Erfindung gelten in entsprechender Weise auch für das erfindungsgemäße Verfahren nach dem zweiten Aspekt der Erfindung. An dieser Stelle und in den Patentansprüchen nicht explizit beschriebene vorteilhafte Ausführungsbeispiele des erfindungsgemäßen Verfahrens entsprechen den vorstehend beschriebenen oder in den Patentansprüchen beschriebenen vorteilhaften Ausführungsbeispielen des erfindungsgemäßen Systems.

Die Erfindung wird nachfolgend anhand eines Ausführungsbeispiels unter Zuhilfenahme der beigefügten Zeichnungen beschrieben. In diesen zeigen:
Fig. 1 eine beispielhafte Verkehrssituation, in der die Erfindung nutzbar ist,
Fig. 2 eine beispielhafte Ausführungsform der Erfindung,
Fig. 3 eine Veranschaulichung des Zusammenhangs zwischen Automatisierungsgrad, Sicherheitsanforderungen und Komponenten des Fahrerassistenzsystems, und
Fig. 4 eine Veranschaulichung des Konzepts der Dekomposition von Sicherheitsanforderungen.

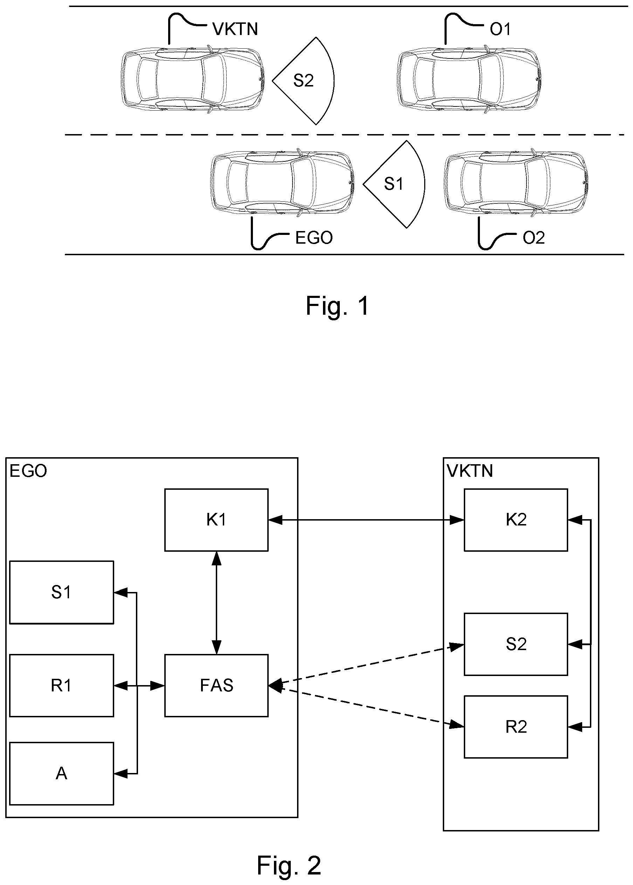

Fig. 1 zeigt eine beispielhafte Verkehrssituation, in der die Erfindung besonders vorteilhaft nutzbar ist.

Es handelt sich dabei um eine Stausituation. Das erfindungsgemäße System ist insbesondere eingerichtet, in einer Stausituation den Verkehrsteilnehmer VKTN im Umfeld des Kraftfahrzeugs EGO zu erkennen.

Die Sensorbereiche des von dem Kraftfahrzeug EGO umfassten zumindest einen ersten Sensors S1 und des von dem Verkehrsteilnehmer VKTN umfassten zumindest einen zweiten Sensors S2 überschneiden sich in dieser beispielhaften Verkehrssituation zumindest teilweise. Die beiden weiteren Verkehrsteilnehmer 01, 02 befinden sich in den Sensorbereichen des zumindest einen ersten Sensors S1 und des zumindest einen zweiten Sensors S2. Die beiden weiteren Verkehrsteilnehmer O1, O2 im Umfeld des Kraftfahrzeugs EGO können somit jeweils aus verschiedenen Blickwinkeln erfasst werden, was einen Fehler bei der Erfassung unwahrscheinlicher macht als bei einer Erfassung ausschließlich durch den zumindest einen ersten Sensors S1. Bei Nutzung zusätzlicher Nutzung des zumindest einen zweiten Sensors S2 durch das Fahrerassistenzsystem des Kraftfahrzeugs EGO kann das Fahrerassistenzsystem des Kraftfahrzeugs EGO somit höhere Sicherheitsanforderungen A3 erfüllen, als ohne die zusätzliche Nutzung des zumindest einen zweiten Sensors S2. Somit kann das Fahrerassistenzsystem des Kraftfahrzeugs EGO auch einen höheren Automatisierungsgrad L3 erreichen.

Fig. 2 zeigt eine beispielhafte Ausführungsform des erfindungsgemäßen Systems zur Erhöhung eines Automatisierungsgrads eines Fahrerassistenzsystems eines Kraftfahrzeugs EGO.

Das Fahrerassistenzsystem umfasst zumindest einen ersten Sensor S1, zumindest eine erste Recheneinheit R1 und zumindest einen Aktuator A als Komponenten. Außerdem umfasst das Fahrerassistenzsystem eine Steuereinheit FAS und eine Kommunikationseinheit K1.

Der Automatisierungsgrad L2, L3 des Fahrerassistenzsystems stellt Sicherheitsanforderungen A2, A3 an den zumindest einen Sensor S1, die zumindest eine Reicheneinheit R1 und den zumindest einen Aktuator stellt A, wobei ein höherer Automatisierungsgrad L3 höhere Anforderungen A3 stellt als ein niedrigerer Automatisierungsgrad L2.

Die Komponenten des Fahrerassistenzsystems sind eingerichtet, Sicherheitsanforderungen A2 bis zu einem vorgegebenen Grad zu erfüllen, wodurch der von dem Fahrerassistenzsystem zu erreichende Automatisierungsgrad L2 begrenzt ist.

Das System ist eingerichtet, einen Verkehrsteilnehmer VKTN im Umfeld des Kraftfahrzeugs EGO zu erkennen, und Festzustellen, dass der Verkehrsteilnehmer VKTN zumindest einen zweiten Sensor S2 und/oder zumindest eine zweite Recheneinheit R2 umfasst. Dies kann beispielsweise erfolgen, indem die Kommunikationseinheit K1 des Kraftfahrzeugs EGO ein ad-hoc-Netzwerk mit einer Kommunikationseinheit K2 des Verkehrsteilnehmers VKTN bildet.

Außerdem ist das System eingerichtet, zu prüfen, ob das Fahrerassistenzsystem bei Nutzung des zumindest einen zweiten Sensors S2 und/oder der zumindest einen zweiten Recheneinheit R2 die Sicherheitsanforderungen A3 des höheren Automatisierungsgrads L3 erfüllt. Hier werden beispielsweise der zumindest eine zweite Sensor S2 und die zumindest eine zweite Recheneinheit R2 virtuell mit der Steuereinheit FAS verbunden, so dass diese auf den zumindest einen ersten Sensor S1, die zumindest eine erste Recheneinheit R1, den zumindest einen Aktuator A, den zumindest einen zweiten Sensor S2 und die zumindest eine zweite Recheneinheit R2 zugreifen kann.

Das System ist weiterhin eingerichtet, den Automatisierungsgrad auf den höheren Automatisierungsgrad L3 durch Nutzung des zumindest einen zweiten Sensors S2 und/oder der zumindest einen zweiten Recheneinheit R2 zu erhöhen, wenn das Fahrerassistenzsystem bei Nutzung des zumindest einen zweiten Sensors S2 und/oder der zumindest einen zweiten Recheneinheit R2 die Sicherheitsanforderungen A3 des höheren Automatisierungsgrads L3 erfüllt.

Das System ist insbesondere eingerichtet, die Sicherheitsanforderungen A3 des höheren Automatisierungsgrads L3 auf den zumindest einen ersten Sensor S1, den zumindest einen zweiten Sensor S2, die zumindest eine erste Recheneinheit R1 und/oder die zumindest eine zweite Recheneinheit R2 zu dekomponieren, zu prüfen, ob das Fahrerassistenz bei zusätzlicher Nutzung des zumindest einen zweiten Sensors S2 und/oder der zumindest einen zweiten Recheneinheit R2 die Sicherheitsanforderungen A3 des erhöhten Automatisierungsgrads L3 erfüllt, und den Automatisierungsgrad des Kraftfahrzeugs EGO auf den erhöhten Automatisierungsgrad L3 durch Nutzung des zumindest einen zweiten Sensors S2 und/oder der zumindest einen zweiten Recheneinheit R2 zu erhöhen, wenn das Fahrerassistenzsystem bei zusätzlicher Nutzung des zumindest einen zweiten Sensors S2 und/oder der zumindest einen zweiten Recheneinheit R2 die Sicherheitsanforderungen A3 des erhöhten Automatisierungsgrads L3 erfüllt.

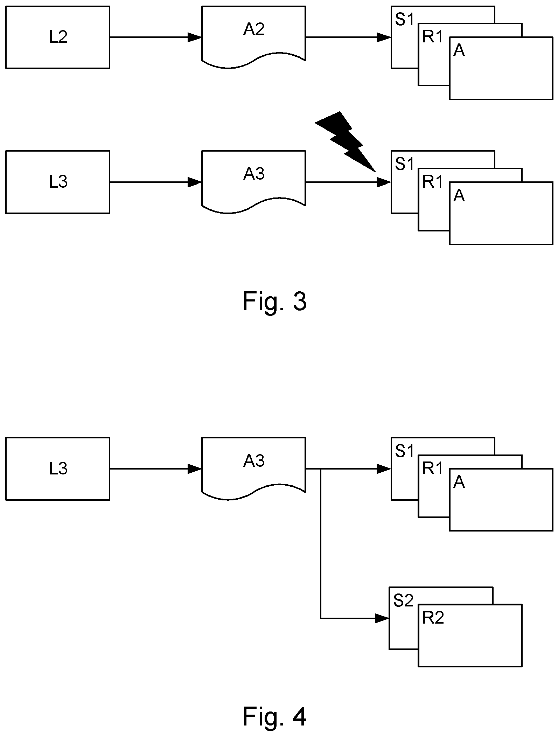

Fig. 3 zeigt eine Veranschaulichung des Zusammenhangs zwischen Automatisierungsgrad, Sicherheitsanforderungen und Komponenten des Fahrerassistenzsystems.

Beispielsweise stellt der Automatisierungsgrad L2 die Sicherheitsanforderungen A2 an die Komponenten des Fahrerassistenzsystems, also an den zumindest einen ersten Sensor S1, die zumindest eine erste Recheneinheit R1 und den zumindest einen Aktuator A.

Der Automatisierungsgrad L3 stellt die Sicherheitsanforderungen A3 an die Komponenten des Fahrerassistenzsystems, also an den zumindest einen ersten Sensor S1, die zumindest eine erste Recheneinheit R1 und den zumindest einen Aktuator A, wobei der höhere Automatisierungsgrad L3 höhere Sicherheitsanforderungen A3 stellt als die Sicherheitsanforderungen A2 des niedrigeren Automatisierungsgrads L2.

Die höheren Sicherheitsanforderungen A3 können im Gegensatz zu den niedrigeren Sicherheitsanforderungen A2 durch die Komponenten des Fahrerassistenzsystems gegebenenfalls nicht erfüllt werden, so dass das Fahrerassistenzsystem höchstens den niedrigeren Automatisierungsgrad L2 erreichen kann.

Fig. 4 zeigt eine Veranschaulichung des Konzepts der Dekomposition von Sicherheitsanforderungen.

Wie zu Fig. 3 bereits erwähnt, können die Komponenten des Fahrerassistenzsystems, also der zumindest eine erste Sensor S1, die zumindest eine Recheneinheit R1 und der zumindest eine Aktuator A die höheren Sicherheitsanforderungen A3 gegebenenfalls nicht erfüllen.

Mit der Dekomposition von Sicherheitsanforderungen ermöglicht die ISO 26262 die Höhe der Sicherheitsanforderungen, die sogenannte Sicherheitslast, auf Komponenten zu verringern, wenn die Sicherheitslast auf zusätzliche Komponenten verteilt werden kann. So erfüllen beispielsweise die Komponenten des Fahrerassistenzsystems in Verbindung mit den zusätzlichen Komponenten des Verkehrsteilnehmers VKTN, also dem zumindest einen zweiten Sensor S2 und der zumindest einen zweiten Recheneinheit R2 durchaus die höheren Sicherheitsanforderungen A3, so dass das Fahrerassistenzsystem bei Nutzung der zusätzlichen Komponenten des Verkehrsteilnehmers doch den höheren Automatisierungsgrad L3 erreichen kann.

## Patentansprüche

1. System zur Erhöhung eines Automatisierungsgrads eines Fahrerassistenzsystems eines Kraftfahrzeugs (EGO), wobei
das Fahrerassistenzsystem zumindest einen ersten Sensor (S1), zumindest eine erste Recheneinheit (R1) und zumindest einen Aktuator (A) als Komponenten umfasst,
der Automatisierungsgrad (L2, L3) des Fahrerassistenzsystems Sicherheitsanforderungen (A2, A3) an den zumindest einen Sensor (S1), die zumindest eine Reicheneinheit (R1) und den zumindest einen Aktuator stellt (A), wobei ein höherer Automatisierungsgrad (L3) höhere Anforderungen (A3) stellt als ein niedrigerer Automatisierungsgrad (L2),
die Komponenten des Fahrerassistenzsystems eingerichtet sind, Sicherheitsanforderungen (A2) bis zu einem vorgegebenen Grad zu erfüllen, wodurch der von dem Fahrerassistenzsystem zu erreichende Automatisierungsgrad (L2) begrenzt ist, und
das System eingerichtet ist, einen Verkehrsteilnehmer (VKTN) im Umfeld des Kraftfahrzeugs (EGO) zu erkennen,
**dadurch gekennzeichnet, dass** das System weiter eingerichtet ist,
Festzustellen, dass der Verkehrsteilnehmer (VKTN) zumindest einen zweiten Sensor (S2) und/oder zumindest eine zweite Recheneinheit (R2) umfasst,
zu prüfen, ob das Fahrerassistenzsystem bei Nutzung des zumindest einen zweiten Sensors (S2) und/oder der zumindest einen zweiten Recheneinheit (R2) die Sicherheitsanforderungen (A3) des höheren Automatisierungsgrads (L3) erfüllt, und
den Automatisierungsgrad auf den höheren Automatisierungsgrad (L3) durch Nutzung des zumindest einen zweiten Sensors (S2) und/oder der zumindest einen zweiten Recheneinheit (R2) zu erhöhen, wenn das Fahrerassistenzsystem bei Nutzung des zumindest einen zweiten Sensors (S2) und/oder der zumindest einen zweiten Recheneinheit (R2) die Sicherheitsanforderungen (A3) des höheren Automatisierungsgrads (L3) erfüllt.

2. System nach Anspruch 1, wobei
ein Fahrerassistenzsystem des Verkehrsteilnehmers (VKTN) den zumindest einen zweiten Sensor (S2) und/oder die zumindest eine zweite Recheneinheit (R3) umfasst,
und das Fahrerassistenzsystem des Verkehrsteilnehmers (VKTN) eingerichtet ist, den Verkehrsteilnehmer (VKTN) automatisiert zu steuern, und
das System eingerichtet ist, dem Fahrerassistenzsystem des Verkehrsteilnehmers (VKTN) vorzugeben, den Verkehrsteilnehmer (VKTN) automatisiert derart zu steuern, dass das Fahrerassistenzsystem des Kraftfahrzeugs (EGO) den zumindest einen zweiten Sensor (S2) und/oder die zumindest eine zweite Recheneinheit (R2) nutzen kann.

3. System nach einem der vorherigen Ansprüche, wobei das System eingerichtet ist
die Sicherheitsanforderungen (A3) des höheren Automatisierungsgrads (L3) auf den zumindest einen ersten Sensor (S1), den zumindest einen zweiten Sensor (S2), die zumindest eine erste Recheneinheit (R1) und/oder die zumindest eine zweite Recheneinheit (R2) zu dekomponieren,
zu prüfen, ob das Fahrerassistenz bei zusätzlicher Nutzung des zumindest einen zweiten Sensors (S2) und/oder der zumindest einen zweiten Recheneinheit (R2) die Sicherheitsanforderungen (A3) des erhöhten Automatisierungsgrads (L3) erfüllt, und
den Automatisierungsgrad des Kraftfahrzeugs (EGO) auf den erhöhten Automatisierungsgrad (L3) durch Nutzung des zumindest einen zweiten Sensors (S2) und/oder der zumindest einen zweiten Recheneinheit (R2) zu erhöhen, wenn das Fahrerassistenzsystem bei zusätzlicher Nutzung des zumindest einen zweiten Sensors (S2) und/oder der zumindest einen zweiten Recheneinheit (R2) die Sicherheitsanforderungen (A3) des erhöhten Automatisierungsgrads (L3) erfüllt.

4. System nach einem der vorherigen Ansprüche, wobei
der Verkehrsteilnehmer (VKTN) zumindest eine zweite Recheneinheit (R2) umfasst, und
das Fahrerassistenzsystem des Kraftfahrzeugs (EGO) eingerichtet ist, die zumindest eine zweite Recheneinheit (R2) als redundanten Rechenpfad zu einem Rechenpfad auf der zumindest einen ersten Recheneinheit (R1) zu nutzen.

5. System nach einem der vorherigen Ansprüche, wobei
der Verkehrsteilnehmer (VKTN) zumindest einen zweiten Sensor (S2) umfasst, und
das Fahrerassistenzsystem des Kraftfahrzeugs (EGO) eingerichtet ist, den zumindest einen zweiten Sensor (S2) als zu dem zumindest einen ersten Sensor (S1) diversitären Sensor zu nutzen.

6. System nach einem der vorherigen Ansprüche,
der Verkehrsteilnehmer (VKTN) zumindest einen zweiten Sensor (S2) umfasst, und
das Fahrerassistenzsystem des Kraftfahrzeugs (EGO) eingerichtet ist, den zumindest einen zweiten Sensor (S2) als zusätzlichen Blickwinkel auf das Umfeld des Kraftfahrzeugs (EGO) zu nutzen.

7. System nach einem der vorherigen Ansprüche, wobei das System eingerichtet ist, in einer Stausituation den Verkehrsteilnehmer (VKTN) im Umfeld des Kraftfahrzeugs (EGO) zu erkennen.

8. System nach einem der vorherigen Ansprüche, wobei der Verkehrsteilnehmer (VKTN) ein Objekt der Verkehrsinfrastruktur ist.

9. Verfahren zur Erhöhung eines Automatisierungsgrads eines Fahrerassistenzsystems eines Kraftfahrzeugs (EGO), wobei
das Fahrerassistenzsystem zumindest einen ersten Sensor (S1), zumindest eine erste Recheneinheit (R1) und zumindest einen Aktuator (A) als Komponenten umfasst,
der Automatisierungsgrad (L2, L3) des Fahrerassistenzsystems Sicherheitsanforderungen (A2, A3) an den zumindest einen Sensor (S1), die zumindest eine Reicheneinheit (R1) und den zumindest einen Aktuator stellt (A), wobei ein höherer Automatisierungsgrad (L3) höhere Anforderungen (A3) stellt als ein niedrigerer Automatisierungsgrad (L2),
die Komponenten des Fahrerassistenzsystems eingerichtet sind, Sicherheitsanforderungen (A2) bis zu einem vorgegebenen Grad zu erfüllen, wodurch der von dem Fahrerassistenzsystem zu erreichende Automatisierungsgrad (L2) begrenzt ist,
das Verfahren den Schritt eines Erkennens eines Verkehrsteilnehmers (VKTN) im Umfeld des Kraftfahrzeugs (EGO) umfasst,
**dadurch gekennzeichnet, dass** das Verfahren weiter die Schritte umfasst:
Feststellen, dass der Verkehrsteilnehmer (VKTN) zumindest einen zweiten Sensor (S2) und/oder zumindest eine zweite Recheneinheit (R2) umfasst,
Prüfen, ob das Fahrerassistenzsystem bei Nutzung des zumindest einen zweiten Sensors (S2) und/oder der zumindest einen zweiten Recheneinheit (R2) die Sicherheitsanforderungen (A3) des höheren Automatisierungsgrads (L3) erfüllt, und
Erhöhen des Automatisierungsgrads auf den höheren Automatisierungsgrad (L3) durch Nutzung des zumindest einen zweiten Sensors (S2) und/oder der zumindest einen zweiten Recheneinheit (R2), wenn das Fahrerassistenzsystem bei Nutzung des zumindest einen zweiten Sensors (S2) und/oder der zumindest einen zweiten Recheneinheit (R2) die Sicherheitsanforderungen (A3) des höheren Automatisierungsgrads (L3) erfüllt.

## Claims

1. System for increasing a level of automation of a driving assistance system of a motor vehicle (EGO), wherein
the driving assistance system comprises at least one first sensor (S1), at least one first processing unit (R1) and at least one actuator (A) as components,
the level of automation (L2, L3) of the driving assistance system puts safety requirements (A2, A3) on the at least one sensor (S1), the at least one storage unit (R1) and the at least one actuator (A), wherein a higher level of automation (L3) has higher requirements (A3) than a lower level of automation (L2),
the components of the driving assistance system are configured to meet safety requirements (A2) up to a predetermined level, thereby limiting the level of automation (L2) to be achieved by the driving assistance system, and
the system is configured to detect a road user (VKTN) in the vicinity of the motor vehicle (EGO),
**characterized in that** the system is further configured to,
establish that the road user (VKTN) comprises at least one second sensor (S2) and/or at least one second processing unit (R2),
verify whether the driving assistance system meets the safety requirements (A3) of the higher level of automation (L3) when using the at least one second sensor (S2) and/or the at least one second processing unit (R2), and
increase the level of automation to the higher level of automation (L3) by using the at least one second sensor (S2) and/or the at least one second processing unit (R2) if the driver assistance system meets the safety requirements (A3) of the higher level of automation (L3) when using the at least one second sensor (S2) and/or the at least one second processing unit (R2).

2. The system according to claim 1, wherein
a driving assistance system of the road user (VKTN) comprises the at least one second sensor (S2) and/or the at least one second computing unit (R3),
and the driving assistance system of the road user (VKTN) is configured to perform automated control of the road user (VKTN), and
the system is configured to instruct the driving assistance system of the road user (VKTN) to perform automatic control of the road user (VKTN) in a manner enabling the driving assistance system of the motor vehicle (EGO) to use the at least one second sensor (S2) and/or the at least one second processing unit (R2).

3. The system according to any one of the preceding claims, the system being configured to
distribute the safety requirements (A3) of the higher level of automation (L3) on the at least one first sensor (S1), the at least one second sensor (S2), the at least one first processing unit (R1) and/or the at least one second processing unit (R2),
verify whether the driving assistance system meets the safety requirements (A3) of the increased level of automation (L3) when additionally using the at least one second sensor (S2) and/or the at least one second processing unit (R2), and
increase the level of automation of the motor vehicle (EGO) to the increased level of automation (L3) by using the at least one second sensor (S2) and/or the at least one second processing unit (R2) if the driving assistance system meets the safety requirements (A3) of the increased level of automation (L3) when additionally using the at least one second sensor (S2) and/or the at least one second processing unit (R2).

4. The system according to any one of the preceding claims, wherein
the road user (VKTN) comprises at least one second computing unit (R2), and
the driving assistance system of the motor vehicle (EGO) is configured to use the at least one second processing unit (R2) as a computing path redundant with regard to a computing path on the at least one first processing unit (R1).

5. The system according to any one of the preceding claims, wherein
the road user (VKTN) comprises at least one second sensor (S2), and
the driving assistance system of the motor vehicle (EGO) is configured to use the at least one second sensor (S2) as a sensor that diversifies with regard to the at least one first sensor (S1).

6. The system according to one of the previous claims,
the road user (VKTN) comprises at least one second sensor (S2), and
the driving assistance system of the motor vehicle (EGO) is configured to use the at least one second sensor (S2) as an additional viewing angle on the vicinity of the motor vehicle (EGO).

7. The system according to any of the previous claims, wherein the system is configured to recognize the road user (VKTN) in the vicinity of the motor vehicle (EGO) in a traffic jam.

8. The system according to any of the previous claims, wherein the road user (VKTN) is an object of the transport infrastructure.

9. Method for increasing a level of automation of a driving assistance system of a motor vehicle (EGO), wherein
the driving assistance system comprises at least one first sensor (S1), at least one first processing unit (R1) and at least one actuator (A) as components,
the level of automation (L2, L3) of the driver assistance system puts safety requirements (A2, A3) on the at least one sensor (S1), the at least one storage unit (R1) and the at least one actuator (A), wherein a higher level of automation (L3) has higher requirements (A3) than a lower level of automation (L2),
the components of the driver assistance system are configured to meet safety requirements (A2) up to a predetermined level, thereby limiting the level of automation (L2) to be achieved by the driving assistance system,
the method comprises the step of identifying a road user (VKTN) in the vicinity of the motor vehicle (EGO),
**characterized in that** the method further comprises the steps of:
determining that the road user (VKTN) comprises at least one second sensor (S2) and/or at least one second processing unit (R2),
verifying whether the driving assistance system meets the safety requirements (A3) of the higher level of automation (L3) when using the at least one second sensor (S2) and/or the at least one second processing unit (R2), and
increasing the level of automation to the higher level of automation (L3) by using the at least one second sensor (S2) and/or the at least one second computing unit (R2) if the driver assistance system meets the safety requirements (A3) of the higher level of automation (L3) when using the at least one second sensor (S2) and/or the at least one second processing unit (R2).

## Revendications

1. Système pour augmenter le niveau d'automatisation d'un système d'aide à la conduite d'un véhicule à moteur (EGO), dans lequel
le système d'aide à la conduite comprend au moins un premier capteur (S1), au moins une première unité de traitement (R1) et au moins un actionneur (A) en tant que composants,
le niveau d'automatisation (L2, L3) du système d'aide à la conduite impose des exigences de sécurité (A2, A3) à au moins un capteur (S1), au moins une unité de traitement (R1) et au moins un actionneur (A), un niveau d'automatisation supérieur (L3) imposant des exigences plus élevées (A3) qu'un niveau d'automatisation inférieur (L2),
les composants du système d'aide à la conduite sont configurés pour répondre aux exigences de sécurité (A2) jusqu'à un niveau prédéterminé, ce qui limite le niveau d'automatisation (L2) à atteindre par le système d'aide à la conduite, et
le système est configuré pour reconnaître un usager de la route (VKTN) dans l'environnement du véhicule automobile (EGO),
**caractérisé en ce que** le système étant en outre configuré pour
établir que l'usager de la route (VKTN) comprend au moins un deuxième capteur (S2) et/ou au moins une deuxième unité de traitement (R2),
vérifier si le système d'aide à la conduite répond aux exigences de sécurité (A3) du niveau supérieur d'automatisation (L3) lors de l'utilisation de l'au moins un deuxième capteur (S2) et/ou de l'au moins une deuxième unité de traitement (R2), et
augmenter le niveau d'automatisation au niveau supérieur d'automatisation (L3) en utilisant l'au moins un deuxième capteur (S2) et/ou l'au moins une seconde unité de traitement (R2) si le système d'aide à la conduite répond aux exigences de sécurité (A3) du niveau supérieur d'automatisation (L3) lors de l'utilisation du deuxième capteur (S2) et/ou de l'au moins une deuxième unité de traitement (R2).

2. Le système selon la revendication 1, dans lequel
un système d'aide à la conduite pour l'usager de la route (VKTN) comprend l'au moins un deuxième capteur (S2) et/ou l'au moins une deuxième unité de calcul (R3),
et le système d'aide à la conduite (VKTN) de l'usager de la route est configuré pour contrôler d'une façon automatisé l'usager de la route (VKTN), et
le système est configuré pour indiquer au système d'aide à la conduite (VKTN) de l'usager de la route de contrôler d'une façon automatisé l'usager de la route (VKTN) de telle sorte que le système d'aide à la conduite du véhicule à moteur (EGO) puisse utiliser l'au moins un second capteur (S2) et/ou l'au moins une seconde unité de traitement (R2).

3. Le Système selon l'une des revendications précédentes, le système configuré pour
distribuer les exigences de sécurité (A3) du niveau supérieur d'automatisation (L3) sur l'au moins un premier capteur (S1), l'au moins un deuxième capteur (S2), l'au moins une première unité de traitement (R1) et/ou l'au moins une deuxième unité de traitement (R2),
vérifier si le système d'aide à la conduite répond aux exigences de sécurité (A3) du niveau supérieur d'automatisation (L3) lorsque l'au moins un deuxième capteur (S2) et/ou l'au moins une deuxième unité de traitement (R2) sont additionnellement utilisés, et
augmenter le niveau d'automatisation du véhicule à moteur (EGO) au niveau supérieur d'automatisation (L3) en utilisant 1 au moins un deuxième capteur (S2) et/ou l'au moins une deuxième unité de traitement (R2) si le système d'aide à la conduite répond aux exigences de sécurité (A3) du niveau supérieur d'automatisation (L3) en utilisant en plus l'au moins un deuxième capteur (S2) et/ou l'au moins une deuxième unité de traitement (R2).

4. Le système selon l'une des revendications précédentes, dans lequel
l'usager de la route (VKTN) comprend au moins une deuxième unité de traitement (R2), et
le système d'aide à la conduite du véhicule à moteur (EGO) est configuré pour utiliser l'au moins une seconde unité de traitement (R2) comme chemin informatique redondant par rapport à un chemin informatique sur ladite au moins une première unité de traitement (R1).

5. Le système selon l'une des revendications précédentes, dans lequel
l'usager de la route (VKTN) comprend au moins un deuxième capteur (S2), et
le système d'aide à la conduite du véhicule à moteur (EGO) est configuré pour utiliser au moins un deuxième capteur (S2) en tant que capteur qui diversifie par rapport à l'au moins un premier capteur (S1).

6. Le système selon l'une des revendications précédentes,
l'usager de la route (VKTN) comprend au moins un deuxième capteur (S2), et
le système d'aide à la conduite du véhicule à moteur (EGO) est configuré pour utiliser l'au moins un second capteur (S2) comme angle de vision supplémentaire sur l'environnement du véhicule à moteur (EGO).

7. le Système selon l'une des revendications précédentes, dans lequel le système est configuré pour reconnaître l'usager de la route (VKTN) dans l'environnement du véhicule à moteur (EGO) dans un embouteillage.

8. Le système selon l'une des revendications précédentes, dans lequel l'usager de la route (VKTN) est un objet de l'infrastructure de transport.

9. Procédé pour augmenter le niveau d'automatisation d'un système d'aide à la conduite d'un véhicule à moteur (EGO), dans lequel
le système d'aide à la conduite comprend au moins un premier capteur (S1), au moins une première unité de traitement (R1) et au moins un actionneur (A) en tant que composants,
le niveau d'automatisation (L2, L3) du système d'aide à la conduite impose des exigences de sécurité (A2, A3) à au moins un capteur (S1), au moins une unité de traitement (R1) et au moins un actionneur (A), un niveau supérieur d'automatisation (L3) imposant des exigences plus élevées (A3) qu'un niveau d'automatisation inférieur (L2),
les composants du système d'aide à la conduite sont configurés pour répondre aux exigences de sécurité (A2) jusqu'à un niveau prédéterminé, ce qui limite le niveau d'automatisation (L2) à atteindre par le système d'aide à la conduite,
le procédé comprend l'étape d'identification d'un usager de la route (VKTN) dans l'environnement du véhicule automobile (EGO),
**caractérisé en ce que** le procédé comprend en outre les étapes suivantes :
constater que l'usager de la route (VKTN) comprend au moins un deuxième capteur (S2) et/ou au moins une deuxième unité de traitement (R2),
vérifier si le système d'aide à la conduite répond aux exigences de sécurité (A3) du niveau supérieur d'automatisation (L3) lors de l'utilisation de l'au moins un deuxième capteur (S2) et/ou de l'au moins une deuxième unité de traitement (R2), et
augmenter le niveau d'automatisation au niveau supérieur d'automatisation (L3) en utilisant l'au moins un deuxième capteur (S2) et/ou l'au moins une deuxième unité de traitement (R2) si le système d'aide à la conduite répond aux exigences de sécurité (A3) du niveau supérieur d'automatisation (L3) lors de l'utilisation de l'au moins un deuxième capteur (S2) et/ou de l'au moins une seconde unité de traitement (R2).
